# EUROPÄISCHE PATENTSCHRIFT

(11) **EP 3 463 836 B1**
(45) Veröffentlichungstag und Bekanntmachung des Hinweises auf die Patenterteilung: **29.12.2021**
(21) Anmeldenummer: 17722019.1
(22) Anmeldetag: 08.05.2017
(51) Int. Cl.: B29D 30/06, B29C 33/10

(54) **ENTLÜFTUNGSEINHEIT FÜR EINE VULKANISATIONSFORM EINES FAHRZEUGLUFTREIFENS**
VENTILATION UNIT FOR A VULCANIZATION MOLD OF A VEHICLE PNEUMATIC TYIRE
UNITÉ DE VENTILATION POUR UN MOULE DE VULCANISATION D'UN PNEUMATIQUE DE VÉHICULE

(30) Priorität: 06.06.2016 DE 102016209912
(43) Veröffentlichungstag der Anmeldung: 10.04.2019
(73) Patentinhaber: Continental Reifen Deutschland GmbH, 30165 Hannover (DE)
(72) Erfinder: HASSELLÖF, Magnus, 30966 Hemmingen (DE); DZICK, Jürgen, 30926 Seelze (DE)
(74) Vertreter: Continental Corporation
(86) Internationale Anmeldenummer: PCT/EP2017/060854
(87) Internationale Veröffentlichungsnummer: WO 2017/211517

(56) Entgegenhaltungen:
- WO-A2-2007/084087
- DE-A1-102009 059 253
- DE-A1-102011 053 207
- DE-A1-102013 225 280
- DE-C1- 19 543 276
- KR-A- 20150 139 140

## Beschreibung

Die Erfindung betrifft eine Entlüftungseinheit für eine Vulkanisationsform eines Fahrzeugluftreifens mit einer zentralen Mittellängsachse, einem in eine Entlüftungsbohrung der Vulkanisationsform einpressbaren zylindrischen Gehäuse und einem im Gehäuse positionierten und gegenüber diesem beweglichen Ventileinsatz, welcher einen Ventilschaft mit einem Ventilteller und eine den Ventilschaft umgebende Schraubendruckfeder aufweist, welche mit ihrem einen Ende am Gehäuse und mit ihrem anderen Ende am Ventilteller abgestützt ist, wobei der Ventilschaft einen Basisabschnitt mit einem Außendurchmesser aufweist, welcher um mindestens 0,3 mm kleiner ist als der

Innendurchmesser der Schraubendruckfeder.

Es ist bekannt und üblich, dass sich in Vulkanisationsformen für Fahrzeugluftreifen, insbesondere für Personenkraftwagen, im Durchschnitt etwa 4500 Entlüftungsbohrungen mit gleich vielen, in diese eingesetzten Entlüftungseinheiten befinden. Die Entlüftungseinheiten enthalten Ventileinsätze, deren Ventilteller bei eingeformten Reifenrohling die Entlüftungsbohrungen verschließen und das Entstehen von Gummiaustrieben während der Vulkanisation des Reifens zumindest weitgehend verhindern. Während des Einformens des Reifenrohlings sind die Ventileinsätze geöffnet, die Ventilteller stehen an der Forminnenseite über, sodass die erforderliche Entlüftung während des Einformens des Reifenrohlings stattfinden kann. Eine Entlüftungseinheit der eingangs genannten Art ist beispielsweise aus der EP 0 774 333 B1 bekannt. Der Ventilschaft dieser bekannten Entlüftungseinheit weist in jenem Abschnitt, auf welchem die Schraubendruckfeder aufgeschoben ist, einen konstanten Durchmesser auf, derart, dass die Schraubendruckfeder relativ lose um den Ventilschaft positioniert ist. Lediglich unmittelbar beim Ventilteller ist ein sehr schmaler, im Durchmesser größerer Schaftabschnitt vorgesehen, an welchem nicht einmal die komplette Endwindung der Schraubendruckfeder, die sich in diesem Bereich an der Innenseite des Ventiltellers abstützt, aufgesteckt werden kann. Eine exakte Positionierung der Schraubendruckfeder ist somit schwierig und verursacht einen unnötigen Zeitaufwand beim Zusammenbauen der Entlüftungseinheit. Unzulänglich bzw. nicht exakt positionierte Schraubendruckfedern beeinträchtigen zudem die Funktionsfähigkeit der kompletten Entlüftungseinheit und sind meist dafür verantwortlich, dass die Ventilteller beim Einformen des Reifenrohlings nicht gut schließen oder kippen. Darüber hinaus ist keine automatische Positionierung der Ventilschäfte mitsamt den Schraubendruckfedern im Gehäuse möglich.

Die WO 2007/084087 A2 offenbart eine zur EP 0 774 333 B1 ähnliche Entlüftungseinheit, wobei der Ventileinsatz und das Gehäuse miteinander verschraubt sind. Ferner ist aus der KR 2015 013 914 0 A eine Entlüftungseinheit mit einem Ventileinsatz bekannt, welcher einen Ventilteller mit einem Absatz und einem konusförmigen Ventilschaft aufweist.

In der Patentschrift DE 10 2011 053207 A1 wird eine Entlüftungseinheit beschrieben, die im Wesentlichen die gleichen Merkmale aufweist wie in der Oberbegriff des Anspruchs 1.

Der Erfindung liegt somit die Aufgabe zu Grunde, eine Entlüftungseinheit der eingangs genannten Art diesbezüglich zu verbessern, vor allem um einen exakten und optimalen Sitz der für eine einwandfreie Funktion der Entlüftungseinheit hauptverantwortlichen Schraubendruckfeder sicherzustellen. Darüber hinaus soll auch ein automatisches Positionieren der Ventilschäfte im Gehäuse ermöglicht sein.

Gelöst wird die gestellte Aufgabe erfindungsgemäß dadurch, dass an den Ventilteller ein zylindrischer Halteabschnitt anschließt, auf welchen die Schraubendruckfeder fest aufgesteckt ist, wobei der Halteabschnitt einen größeren Durchmesser als der Basisabschnitt und eine Höhe von mindestens 1,0 mm aufweist, wobei die Schraubendruckfeder zumindest an ihrem auf den Halteabschnitt aufsteckbaren Ende zumindest zwei eng beabstandete Windungen aufweist, welche einen gegenseitigen Abstand aufweisen, welcher im entspannten Zustand der Schraubendruckfeder höchstens der Hälfte des gegenseitigen Abstandes der sonstigen Windungen entspricht.

Durch die erfindungsgemäße Ausgestaltung des Ventilschaftes mit einem Halteabschnitt kann die Schraubendruckfeder mit zumindest zwei ihrer Windungen am Halteabschnitt gegen Verlust gesichert, jedoch voll funktionsfähig, zentriert und somit in der erwünschten Lage positioniert werden. Die Erfindung erlaubt es auch, Federn unterschiedlicher Federstärken auf gleiche Weise zu positionieren. Nachdem durch die Erfindung die oben geschilderten Probleme mit einem exakten und zentrierten Aufbringen der Schraubendruckfeder am Ventilschaft behoben sind, kann der Ventilschaft mitsamt der Schraubendruckfeder automatisiert im Gehäuse positioniert werden, wobei keine Gefahr einer unerwünschten Deformation der Feder besteht. Beim automatischen Einsetzen des Ventilschaftes wird dieser beispielsweise mittels Druckluft in das Gehäuse eingeschossen.

Damit dies einwandfrei funktioniert, muss die Schraubendruckfeder fest aufgeklemmt sein, damit sie während des Einsetzens des Ventilschaftes nicht vorne über den Ventilschaft übersteht und sich nicht verhaken kann.

Bei einer bevorzugten Ausführungsform der Erfindung weisen die eng beabstandeten Windungen der Schraubendruckfeder einen gegenseitigen Abstand auf, welcher im entspannten Zustand der Schraubendruckfeder höchstens einem Drittel des gegenseitigen Abstandes der sonstigen Windungen entspricht.

Um ein festes Verklemmen der eng beabstandeten Windungen der Schraubendruckfeder am zylindrischen Halteabschnitt zu gewährleisten, ist es von Vorteil, wenn der zylindrische Halteabschnitt eine Höhe von bis zu 1,5 mm aufweist.

Gemäß einer weiteren bevorzugten Ausführungsform der Erfindung ist zwischen dem Basisabschnitt und dem Halteabschnitt ein Zentrierabschnitt vorhanden, welcher eine am Ventilschaft umlaufende Schrägfläche ist, die vorzugsweise unter einem Winkel von 10° bis 20°, insbesondere von 15°, zur zentralen Mittellängsachse verläuft. Der Zentrierabschnitt unterstützt und erleichtert somit das Aufstecken der Schraubendruckfeder am Halteabschnitt.

Weitere Merkmale, Vorteile und Einzelheiten der Erfindung werden nun anhand der Zeichnung näher beschrieben. Dabei zeigen
Fig. 1a und 1b schematisch Schnittdarstellungen eines Teilbereiches eines Formsegmentes einer Vulkanisationsform,
Fig. 2 einen Längsschnitt einer Ausführungsvariante einer erfindungsgemäß ausgeführten Entlüftungseinheit,
Fig. 3a und Fig. 4 Schnittdarstellungen einzelner Bestandteile der Entlüftungseinheit gemäß Fig. 2, Fig. 3b eine Variante der Fig. 3a und
Fig. 5 und Fig. 6 Ausführungsvarianten der Ausgestaltung eines Ventiltellers.

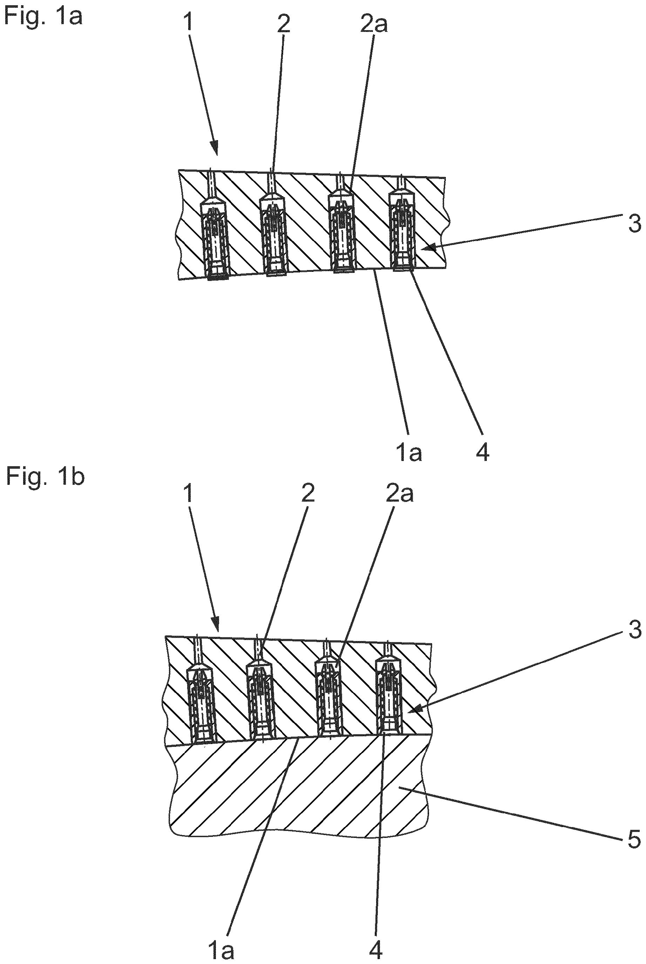

Fig. 1a und 1b zeigen Schnittdarstellungen eines Teiles eines Formsegmentes 1 einer Vulkanisationsform, die, wie es üblich ist, durch den den Laufstreifenbereich formenden Teil radial in eine Anzahl von Formsegmenten, wobei insbesondere zwischen sieben und dreizehn Formsegmente vorgesehen sind, geteilt ist. Die Schnitte durch das Formsegment 1 zeigen ferner eine Anzahl von Längsschnitten durch Entlüftungsbohrungen 2, welche in radialer Richtung orientiert sind und bei der gezeigten Ausführung an der Formsegmentinnenseite 1a jeweils einen Abschnitt 2a mit einem größeren Durchmesser aufweisen. In jedem Abschnitt 2a ist eine Entlüftungseinheit 3 eingesetzt. Die Entlüftungseinheiten 3 sind in der in Fig. 1a gezeigten Darstellung - ohne eingeformten Reifenrohling - sämtlich geöffnet, wobei Feder beaufschlagte Ventilteller 4 etwas über die Formsegmentinnenseite 1a überstehen und in die Vulkanisationsformkaverne ragen. Fig. 1b zeigt in analoger Darstellungsweise zu Fig. 1a den Moment, wo gegen Ende des Einformens eines Reifenrohlings sein den Laufstreifen 5 abformender Teil mit der Formsegmentinnenseite 1a in Kontakt gekommen ist, sodass der rohe Laufstreifen 5 die Ventilteller 4 in die in Fig. 1b gezeigte geschlossene Stellung gedrückt haben.

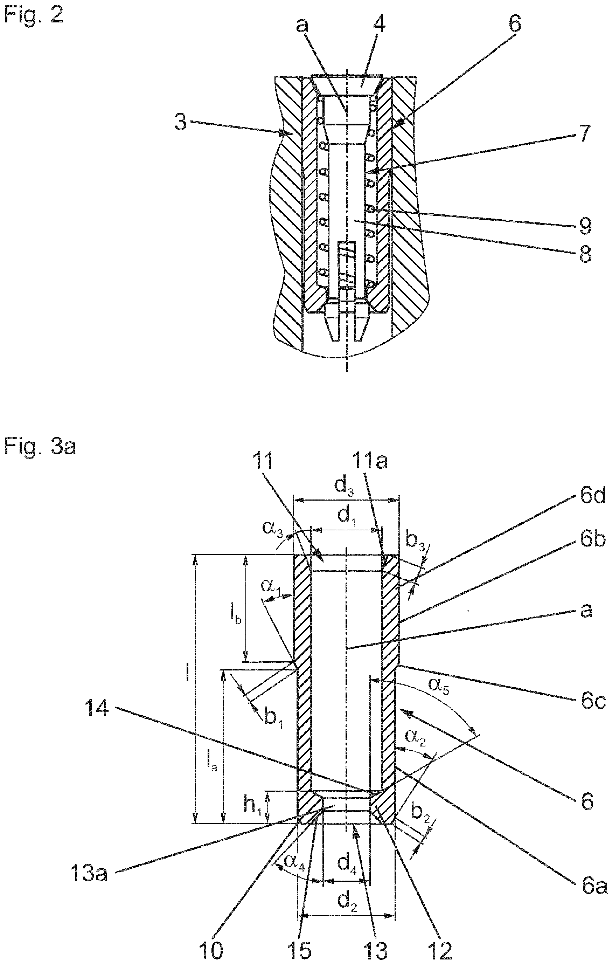

Fig. 2 zeigt in der gleichen Schnittebene wie die Figuren 1a und 1b in vergrößerter Darstellung eine einzelne Entlüftungseinheit 3, welche ein Gehäuse 6, einen Ventileinsatz 7 aus einem Ventilschaft 8 und dem bereits erwähnten Ventilteller 4 sowie eine Schraubendruckfeder 9, welche den Ventilschaft 8 umgibt und mit ihrem einen Ende am Gehäuse 6 und mit ihrem anderen Ende an der Unterseite des Ventiltellers 4 abgestützt ist. Die Entlüftungseinheit 3 weist eine in ihrer Längserstreckung - diese entspricht in Formsegmenten , die den Laufstreifen ausformen der radialen Richtung im Reifen - verlaufende Mittellängsachse a auf, bezüglich welcher die meisten Bestandteile der Entlüftungseinheit 3 rotationssymmetrisch ausgeführt sind. Die Mittellängsachse a der Entlüftungseinheit 3 ist daher gleichzeitig die Mittellängsachse a des Gehäuses 6 und des Ventileinsatzes 7.

In der nachfolgenden detaillierten Beschreibung einzelner Bestandteile der Entlüftungseinheit 3 wird die Ausgestaltung dieser Bestandteile in Bezug auf ihre Einbaulage im Formsegment 1 bzw. der Position in den Figuren betrachtet, dies betrifft beispielsweise Bezeichnungen wie außen bzw. oben und innen. Die dargestellte Entlüftungseinheit ist beispielhaft eine Entlüftungseinheit mit einem Durchmesser von 3,2 mm, daher eine Entlüftungseinheit für Vulkanisationsformen für PKW-Reifen. Üblicherweise können Entlüftungseinheiten einen Durchmesser (an die Entlüftungsbohrung angepasster Durchmesser) von 2 mm bis 5 mm aufweisen.

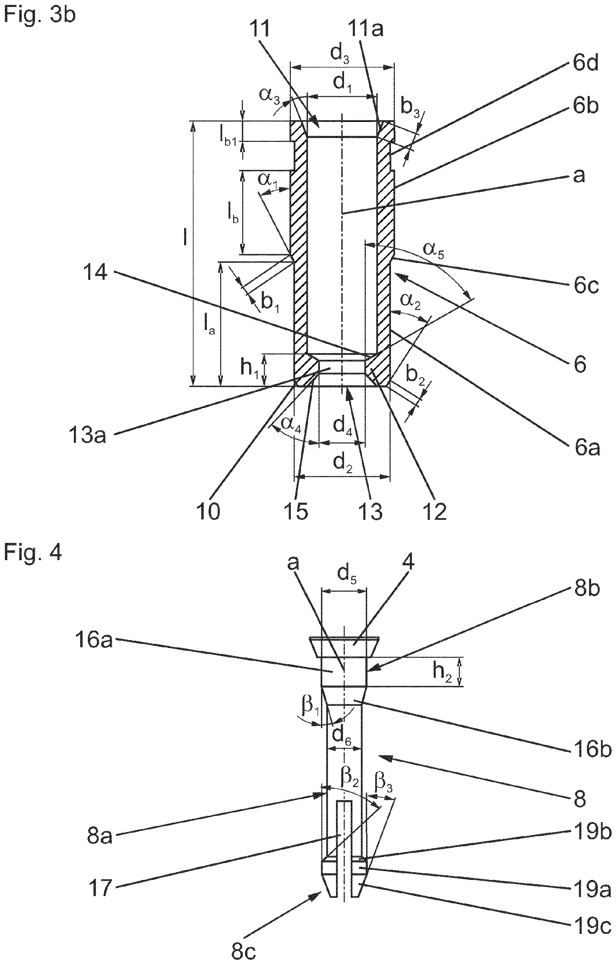

Das in Fig. 3a und 3b separat dargestellte Gehäuse 6 ist im Wesentlichen eine zylindrische Hülse mit einem über den Großteil seiner Erstreckung entlang der Mittellängsachse a konstanten inneren Durchmesser d₁. Das Gehäuse 6 weist an seiner Außenseite einen inneren Abschnitt 6a auf, welcher bis zum innenseitigen Ende des Gehäuses 6 reicht und eine Länge 1ₐ besitzt, die mindestens 35% der Gehäuselänge 1 beträgt. Der Abschnitt 6a weist einen Außendurchmesser d₂ auf, welcher um mindestens 0,3 mm, insbesondere um bis zu 0,5mm, geringer ist als der Innendurchmesser des Bohrungsabschnittes 2a. Bei beiden Ausführungsvarianten geht der innere Abschnitt 6a über eine das Gehäuse 6 umlaufende Schrägfläche 6c in einen weiteren Abschnitt 6b über. Der weitere Abschnitt 6b erstreckt sich bei der in Fig. 3a gezeigten Ausführung bis zum äußeren bzw. oberen Ende des Gehäuses 6. Bei der in Fig. 3b gezeigten Ausführung schließt an das obere Ende des Gehäuses 6 ein schmaler Randabschnitt 6_{b₁} an, welcher vom Abschnitt 6b durch einen am Gehäuse 6 umlaufenden, im Querschnitt nutartig ausgestalteten schmalen Abschnitt 6d getrennt ist, wobei der Außendurchmesser des Abschnittes 6d insbesondere dem Außendurchmesser d₂ des inneren Abschnittes 6a entspricht. Der Randabschnitt 6_{b₁} weist eine Länge 1_{b₁} von mindestens 1,0 mm auf. Sowohl der Abschnitt 6b (Fig. 3a, Fig. 3b) als auch der Randabschnitt 6_{b₁} (Fig. 3b) weisen einen Außendurchmesser d₃ auf, welcher um 0,3 mm bis 0,5 mm größer ist als der Außendurchmesser des Abschnittes 6a und an den Innendurchmesser des Abschnittes 2a der Entlüftungsbohrung 2 derart angepasst ist, dass der Abschnitt 6b (Fig. 3a) bzw. dieser und der Randabschnitt 6b₁ (Fig. 3b) in die Entlüftungsbohrung 2 eingepresst werden kann bzw. können. Der Abschnitt 6b bzw. die Abschnitte 6b und 6b₁ erstreckt sich bzw. erstrecken sich insgesamt über eine Länge 1_{b} (Fig. 3a) bzw. 1_{b} + 1_{b₁} (Fig. 3b) von 30% bis 45 der Gehäuselänge 1. Das Gehäuse 6 kann ferner mehr als zwei Abschnitte aufweisen, deren Außendurchmesser in der erwähnten Weise an den Innendurchmesser der Entlüftungsbohrung 2 angepasst ist. Die am Gehäuse 6 zwischen dem inneren Abschnitt 6a und dem anschließenden Abschnitt 6b außenseitig umlaufende Schrägfläche 6c verläuft zur Außenseite des Abschnittes 6b bzw. zur Mittellängsachse a unter einem Winkel α₁ von 10° bis 60°, insbesondere von 15° bis 45°. Die Breite b₁ der Schrägfläche 6c beträgt beispielsweise in der Größenordnung von 0,20 bis 0,30 mm.

Eine weitere Schrägfläche 10 mit Neigung nach innen ist außenseitig am inneren Ende des Gehäuses 6 ausgebildet. Die Schrägfläche 10 ist eine Art Fase an der Gehäusekante und verläuft zur Außenseite des Abschnittes 6a bzw. zur Mittellängsachse a unter einem konstanten Winkel α₂, welcher 10° bis 60°, insbesondere 15° bis 45°, beträgt. Die Schrägfläche 10 ist sehr schmal, ihre Breite b₂ beträgt in der Größenordnung von 0,15 bis 0,20 mm.

Am äußeren, der Formsegmentinnenseite 1a zugewandten Endbereich ist das Gehäuse 6 innenseitig mit einer kegelstumpfförmigen Verbreiterung 11 versehen, die an die Ausgestaltung des Ventiltellers 4, welcher, wie es beispielsweise Fig. 2 zeigt, ebenfalls kegelstumpfförmig gestaltet ist, angepasst ist. Die Verbreiterung 11 wird demnach von einer innenseitig am Rand des Gehäuses 6 umlaufenden Schrägfläche 11a gebildet, die zur Mittellängsachse a unter einem Winkel α₃ von 10° bis 45°, vorzugsweise 15° bis 30°, insbesondere 22°, verläuft. Die Breite b₃ der Schrägfläche 11a beträgt in der Größenordnung von 0,5 mm.

An dem der kegelstumpfförmigen Verbreiterung 11 gegenüberliegenden Endbereich des Gehäuses 6 befindet sich ein Gehäuseboden 12, welcher eine mittige kreisrunde Öffnung 13 mit einem zentralen schmalsten Öffhungsabschnitt 13a aufweist, dessen Innendurchmesser d₄ kleiner ist als der Innendurchmesser d₁ des Gehäuses 6 und von einem schmalen Ring umlaufen ist. Oberhalb und unterhalb des Öffhungsabschnittes 13a ist die Öffnung 13 mittels je einer Schrägfläche 14, 15 verbreitert. Die außenseitig am Gehäuseboden 12 verlaufende Schrägfläche 15 verläuft unter einem Winkel von α₄ von 30° bis 60°, insbesondere von etwa 45°, zur Mittellängsachse a. Gehäuseinnenseitig bildet die zweite Schrägfläche 14 bei der gezeigten Ausführung eine Übergangsfläche zur Gehäuseinnenwand und verläuft unter einem Winkel α₅ von 30° bis 70°, insbesondere in der Größenordnung von 60°, zur Mittellängsachse a. Die Höhe h₁ des Gehäusebodens 12 parallel zur Mittellängsachse a beträgt in der Größenordnung von 0,4 mm bis 0,6 mm.

Der Ventileinsatz 7 wird nun anhand der Figuren 2 und 4 näher beschrieben. Fig. 4 zeigt den Ventilschaft 8, welcher sich aus einem über den Großteil seiner Erstreckung verlaufenden, zylindrischen Basisabschnitt 8a mit einem konstanten Durchmesser, einem der Formsegmentinnenseite 1a zugewandten Endabschnitt 8b, auf welchem sich der Ventilteller 4 befindet, und einem der Formsegmentinnenseite abgewandten Endabschnitt 8c zusammensetzt. Der Endabschnitt 8b weist einen an den Ventilteller 4 anschließenden, zylindrischen Halteabschnitt 16a auf, welcher eine Höhe h₂ von 1,0 mm bis 1,5 mm aufweist und dessen Durchmesser d₅ größer ist als der Durchmesser d₆ des Basisabschnittes 8a und an den Innendurchmesser der Schraubendruckfeder 9 derart angepasst ist, dass diese auf den Halteabschnitt 16a fest aufgesteckt werden kann und sich innenseitig am Ventilteller 4 abstützt. Wie Fig. 2 zeigt weist die Schraubendruckfeder 9 an ihrem auf den Halteabschnitt 16a aufsteckbaren Ende zumindest zwei eng beabstandete Windungen 9a auf, deren gegenseitiger Abstand im entspannten Zustand der Schraubendruckfeder 9 höchsten der Hälfte, insbesondere höchstens einem Drittel, des gegenseitigen Abstandes der sonstigen Windungen entspricht. Eine solche "Doppelwindung" kann auch am zweiten Ende der Schraubendruckfeder 9 vorgesehen sein. Der Durchmesser d₆ des Basisabschnittes 8a ist an den Innendurchmesser d₄ des Öffhungsabschnittes 13a im Gehäuseboden 12 angepasst. Der Durchmesser d₆ des Basisabschnittes 8a ist um mindestens 0,3 mm kleiner als der Innendurchmesser der Schraubendruckfeder 9. Zwischen dem Basisabschnitt 8a und dem Halteabschnitt 16a befindet sich ein Zentrierabschnitt 16b, welcher eine am Endabschnitt 8b umlaufende Schrägfläche ist, und zur zentralen Mittellängsachse a unter einem Winkel β₁ von 10° bis 20°, insbesondere in der Größenordnung von 15°, verläuft.

Der zweite Endabschnitt 8c ist mittig durch einen entlang der Mittellängsachse a und in den Basisabschnitt 8a hineinreichenden Schlitz 17 zweigeteilt. Der Schlitz 17 gestattet ein Zusammendrücken bzw. Aufeinanderzubewegen der beiden Endabschnittteile 18a, 18b, sodass der Ventilschaft 8 durch die Engstelle bzw. die Öffnung 13 im umlaufenden Vorsprung 12 des Gehäuses 6 durchgeführt und derart am Gehäuse 6 befestigt werden kann. Jeder Endabschnittteil 18a, 18b bildet einen Vorsprung, welcher gemäß der zylindrischen Schaftform jeweils insgesamt gerundet ist. An seiner breitesten Stelle weist jeder Vorsprung einen Bund 19a auf, welcher über eine Schrägfläche 19b an den Basisabschnitt 8a anschließt. Die Schrägflächen 19b verlaufen unter einem Winkel β₂ von 30° bis 60°, insbesondere von 45°, zur Mittellängsachse a, wobei der Winkel β₂ vorzugsweise dem Winkel α₄ der Schrägfläche 15 bei der Öffnung 13 im Gehäuseboden 12 des Gehäuses 6 entspricht, sodass sich, wie Fig. 2 zeigt, bei eingesetztem Ventilschaft 8 die Schrägfläche 19b an der Schrägfläche 15 des Gehäuses 6 abstützt. Die

Endabschnittteile 18a, 18b verjüngen sich in Richtung zum Schaftende und weisen außenseitig Schrägflächen 19c auf, die jeweils unter einem Winkel β₃ von 15° bis 25°, insbesondere von 20°, zur Mittellängsachse a verlaufen und eine Einführhilfe beim Einsetzen des Ventilschaftes 8 in das Gehäuse 6 bilden. Wie Fig. 2 zeigt, befinden sich bei im Gehäuse 6 eingesetztem Ventilschaft 8 die Endabschnitte 18a, 18b unterhalb der Öffnung 13.

Zum Zusammenbauen der Entlüftungseinheit 3 wird die Schraubendruckfeder 9 über dem Ventilschaft 8 positioniert und der Ventilschaft 8 wird unter Zusammendrücken der beiden Endabschnittteile 18a, 18b durch die mittige Öffnung 13 im Vorsprung 12 des Gehäuses geführt und derart am Gehäuse 6 befestigt. Die Schrägflächen 14 oberhalb des Öffhungsabschnittes 13a sowie die Schrägflächen 19c am Ventilschaft 8 ermöglichen ein Einsetzen unter geringem Kraftaufwand.

Bei der in Fig. 2 und Fig. 4 gezeigten Ausführung ist der Ventilteller 4 mit einer ebenen äußeren Oberfläche ausgeführt. An der Oberfläche des Ventiltellers kann jedoch zumindest eine Erhebung und/oder zumindest eine Vertiefung ausgebildet sein, wobei ein etwaiger Oberflächenbereich außerhalb der Erhebung oder Vertiefung eben bleibt. Die Höhe der Erhebung bzw. von Erhebungen, in vertikaler Richtung gegenüber einer den kreisförmigen Rand des Ventiltellers enthaltenden Ebene, sollte vorzugsweise höchsten dem Hub des Ventilschaftes 8 entsprechen. Erhebungen und Vertiefungen können nahezu beliebig gestaltet sein, wobei vorzugsweise die Vertiefung(en) oder Erhebung(en) bezüglich zumindest einer Ebene, welche die zentrale Mittellängsachse a enthält, symmetrisch angeordnet oder ausgebildet ist bzw. sind. Erhebungen oder Vertiefungen können quaderförmig, in Draufsicht sternförmig oder kreisförmig und dergleichen ausgestaltet sein. Erhebungen weisen entweder eine gerundete Oberfläche oder eine äußere Oberfläche auf, die parallel zu der den kreisförmigen Rand des Ventiltellers enthaltenden Ebene verläuft.

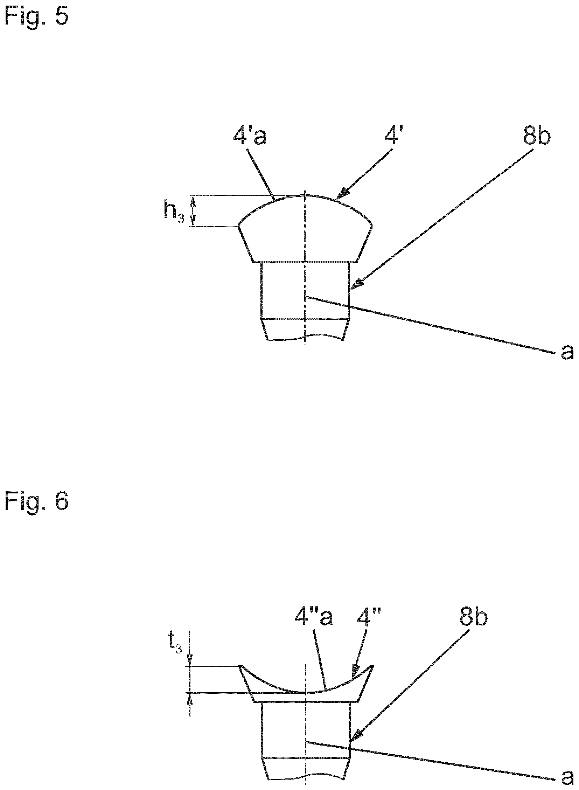

Fig. 5 und Fig. 6 zeigen bevorzugte Ausführungsvarianten von Ventiltellern 4', 4" anhand eines Teilbereiches des Endabschnittes 8a des Ventilschaftes 8. Der Ventilteller 4' gemäß Fig. 5 weist als Erhebung eine Wölbung der gesamten Oberfläche 4'a des Ventiltellers 4' nach außen auf, der Ventilteller 4" gemäß Fig. 6 weist als Vertiefung eine Wölbung der gesamten Oberfläche 4"a nach innen auf. Die Wölbungen können kugelabschnittförmig ausgebildet sein, wobei die Höhe h₃ bzw. Tiefe t₁ des Kugelabschnittes, gegenüber der den kreisförmigen Rand des Ventiltellers enthaltenden Ebene höchstens 30% des Radius der zugrundeliegenden Kugel entspricht und höchstens 0,50 mm beträgt.

Zum einen kann durch eine Erhebung oder mehrere Erhebungen am Ventilteller das Bewegen des Ventiltellers in seine geschlossene Stellung unterstützt werden, zum anderen können durch Erhebungen und/oder Vertiefungen am Ventilteller gezielt lokale Vertiefungen oder Erhebungen am Laufstreifen des Reifens ausgebildet werden, die optisch als weniger störend empfunden werden als die Abdrücke von Ventiltellern mit ebener Oberfläche.

Die Entlüftungseinheit 3 lässt sich auf eine präzise und einfache Weise in den Abschnitt 2a der Entlüftungsbohrung 2 des Formsegmentes 1 einsetzen. Nachdem nur der äußere Abschnitt 6a des Gehäuses 6 in die Entlüftungsbohrung 2 eingepresst wird, wird das Gehäuse 6 mit seinem dünneren Abschnitt 6b in der Entlüftungsbohrung 2 positioniert. Die Schrägfläche 10 am unteren Ende des Abschnittes 6b unterstützt ein einfaches Einsetzen in die Bohrung 2. Dadurch wird es möglich, das Gehäuse 6 auch maschinell einzusetzen ohne eine perfekte Ausrichtung der Vorrichtung, z.B. eines Roboters, zur Bohrung zu haben. Durch den längeren dünneren Abschnitt 6b wird das Gehäuse 6 in der Bohrung 2 vorjustiert und steht im Wesentlichen parallel zur Bohrungsachse, wenn die Schrägfläche 6c mit dem Bohrungsrand in Berührung kommt. Jetzt wird das Gehäuse 6 exakt zentriert und gerade gerichtet, damit das Gehäuse 6 dann parallel zur Bohrungsachse eingebracht wird ohne den Bohrungsrand zu beschädigen oder asymmetrisch aufzuweiten. Es wird daher nicht nur eine besonders exakte Positionierung der Entlüftungseinheit 3 in der Entlüftungsbohrung 2 ermöglicht, sondern es ist auch der Kraftaufwand deutlich verringert. Grundsätzlich kann die Entlüftungseinheit 3 komplett aus ihren Teilen zusammengesetzt sein, bevor sie in die Entlüftungsbohrung eingebracht wird. Es ist jedoch auch möglich, zuerst das Gehäuse 6 in die Entlüftungsbohrung 2 einzubringen und dann die weiteren Teile im Gehäuse 6 zu positionieren.

### Bezugsziffernliste

- 1: Formsegment
- 1a: Formsegmentinnenseite
- 2: Entlüftungsbohrung
- 2a: Abschnitt
- 3: Entlüftungseinheit
- 4, 4', 4": Ventilteller
- 5: Laufstreifen
- 6: Gehäuse
- 6b₁: Randabschnitt
- 6a, 6b: Abschnitt
- 6c: Schrägfläche
- 6d: Abschnitt
- 7: Ventileinsatz
- 8: Ventilschaft
- 8a: Basisabschnitt
- 8b, 8c: Endabschnitt
- 9: Schaubendruckfeder
- 9a: Windung
- 10: Schrägfläche
- 11: Verbreiterung
- 11a: Schrägfläche
- 12: Gehäuseboden
- 13: Öffnung
- 13a: Öffnungsabschnitt
- 14, 15: Schrägfläche
- 16a: Halteabschnitt
- 16b: Zentrierabschnitt
- 17: Schlitz
- 18a, 18b: Endabschnittteil
- 19a: Bund
- 19b, 19c: Schrägfläche
- a: Mittellängsachse
- b₁, b₂, b₃: Breite
- d₁, d₂, d₃, d₄, d₅, d₆: Durchmesser
- l: Gehäuselänge
- lₐ, l_{b}, l_{b1}: Länge
- α₁, α₂, α₃, α₄, α₅: Winkel (Gehäuse)
- β₁, β₂, β₃: Winkel (Schaft)
- h₁, h₂, h₃: Höhe
- t₁: Tiefe

## Patentansprüche

1. Entlüftungseinheit (3) für eine Vulkanisationsform eines Fahrzeugluftreifens mit einer zentralen Mittellängsachse (a), einem in eine Entlüftungsbohrung (2) der Vulkanisationsform einpressbaren zylindrischen Gehäuse (6) und einem im Gehäuse (6) positionierten und gegenüber diesem beweglichen Ventileinsatz (7), welcher einen Ventilschaft (8) mit einem Ventilteller (4, 4', 4") und eine den Ventilschaft (8) umgebende Schraubendruckfeder (9) aufweist, welche mit ihrem einen Ende am Gehäuse (6) und mit ihrem anderen Ende am Ventilteller (4, 4', 4") abgestützt ist, wobei der Ventilschaft (8) einen Basisabschnitt (8a) mit einem Außendurchmesser (d₆) aufweist, welcher um mindestens 0,3 mm kleiner ist als der
Innendurchmesser der Schraubendruckfeder (9),
**dadurch gekennzeichnet,**
**dass** an den Ventilteller (4) ein zylindrischer Halteabschnitt (16a) anschließt, auf welchen die Schraubendruckfeder (9) fest aufgesteckt ist, wobei der Halteabschnitt (16a) einen größeren Durchmesser als der Basisabschnitt (8) und eine Höhe (h₂) von mindestens 1,0 mm aufweist, wobei die Schraubendruckfeder (9) zumindest an ihrem auf den Halteabschnitt (16a) aufsteckbaren Ende zumindest zwei eng beabstandete Windungen aufweist, welche einen gegenseitigen Abstand aufweisen, welcher im entspannten Zustand der Schraubendruckfeder (9) höchstens der Hälfte des gegenseitigen Abstandes der sonstigen Windungen entspricht.

2. Entlüftungseinheit (3) nach Anspruch 1, **dadurch gekennzeichnet, dass** der gegenseitige Abstand, welchen die eng beabstandeten Windungen der Schraubendruckfeder (9) aufweisen, höchstens einem Drittel des gegenseitigen Abstandes der sonstigen Windungen entspricht.

3. Entlüftungseinheit (3) nach Anspruch 1, **dadurch gekennzeichnet, dass** der zylindrische Halteabschnitt (16a) eine Höhe (h₂) von bis zu 1,5 mm aufweist.

4. Entlüftungseinheit (3) nach Anspruch 1 oder 2, **dadurch gekennzeichnet, dass** sich zwischen dem Basisabschnitt (8a) und dem Halteabschnitt (16a) ein Zentrierabschnitt (16b) befindet, welcher eine am Ventilschaft (8) umlaufende Schrägfläche ist.

5. Entlüftungseinheit (3) nach einem der Ansprüche 1 bis 3, **dadurch gekennzeichnet, dass** der Zentrierabschnitt (16b) zur zentralen Mittellängsachse (a) unter einem Winkel (β ₁) von 10° bis 20°, insbesondere von 15°, verläuft.

## Claims

1. Venting unit (3) for a vulcanizing mould of a pneumatic vehicle tyre, having a central longitudinal mid-axis (a), a cylindrical housing (6), which can be pressed into a venting bore (2) of the vulcanizing mould, and a valve insert (7), which is positioned in the housing (6) and is movable relative thereto and has a valve shank (8) with a valve disc (4, 4', 4'') and has a helical compression spring (9), which surrounds the valve shank (8) and is supported with its one end on the housing (6) and with its other end on the valve disc (4, 4', 4''), the valve shank (8) having a base portion (8a) with an outer diameter (d₆) which is smaller, by at least 0.3 mm, than the inner diameter of the helical compression spring (9), **characterized**
**in that** the valve disc (4) is adjoined by a cylindrical holding portion (16a), on which the helical compression spring (9) is firmly fitted, the holding portion (16a) having a greater diameter than the base portion (8) and a height (h₂) of at least 1.0 mm, the helical compression spring (9) having at least at its end that can be fitted onto the holding portion (16a) at least two closely spaced turns, which have a mutual spacing which, in the relaxed state of the helical compression spring (9), corresponds to at most half of the mutual spacing of the other turns.

2. Venting unit (3) according to Claim 1, **characterized in that** the mutual spacing which the closely spaced turns of the helical compression spring (9) have corresponds to at most a third of the mutual spacing of the other turns.

3. Venting unit (3) according to Claim 1, **characterized in that** the cylindrical holding portion (16a) has a height (h₂) of up to 1.5 mm.

4. Venting unit (3) according to Claim 1 or 2, **characterized in that** between the base portion (8a) and the holding portion (16a) there is a centring portion (16b), which is a sloping surface that runs around the valve shank (8).

5. Venting unit (3) according to one of Claims 1 to 3, **characterized in that** the centring portion (16b) runs at an angle (β₁) of 10° to 20°, in particular of 15°, in relation to the central longitudinal mid-axis (a).

## Revendications

1. Unité de désaération (3) pour un moule de vulcanisation d'un pneumatique de véhicule, comprenant un axe longitudinal central (a), un boîtier cylindrique (6) pouvant être pressé dans un perçage de désaération (2) du moule de vulcanisation, et un insert de soupape (7) positionné dans le boîtier (6) et mobile par rapport à celui-ci, qui présente une tige de soupape (8) dotée d'une tête de soupape (4, 4', 4") et d'un ressort de compression hélicoïdal (9) entourant la tige de soupape (8) et qui prend appui par une extrémité sur le boîtier (6) et par l'autre extrémité sur la tête de soupape (4, 4', 4"), la tige de soupape (8) présentant une partie de base (8a) ayant un diamètre extérieur (d₆) qui est inférieur d'au moins 0,3 mm au diamètre intérieur du ressort de compression hélicoïdal (9),
**caractérisée en ce que** la tête de soupape (4) est suivie d'une partie de retenue cylindrique (16a) sur laquelle le ressort de compression hélicoïdal (9) est emmanché solidement, la partie de retenue (16a) présentant un diamètre supérieur à la partie de base (8) et une hauteur (h2) d'au moins 1,0 mm, le ressort de compression hélicoïdal (9) présentant au moins à son extrémité pouvant être emmanchée sur la partie de retenue (16a) au moins deux spires espacées étroitement qui présentent une distance mutuelle qui correspond à l'état détendu du ressort de compression hélicoïdal (9) au maximum à la moitié de la distance mutuelle des autres spires.

2. Unité de désaération (3) selon la revendication 1, **caractérisée en ce que** la distance mutuelle que présentent les spires du ressort de compression hélicoïdal (9) espacées étroitement correspond à un tiers de la distance mutuelle des autres spires.

3. Unité de désaération (3) selon la revendication 1, **caractérisée en ce que** la partie de retenue cylindrique (16a) présente une hauteur (h2) jusqu'à 1,5 mm.

4. Unité de désaération (3) selon la revendication 1 ou 2, **caractérisée en ce qu'**une partie de centrage (16b), qui est une surface inclinée périphérique au niveau de la tige de soupape (8), se trouve entre la partie de base (8a) et la partie de retenue (16a).

5. Unité de désaération (3) selon l'une quelconque des revendications 1 à 3, **caractérisée en ce que** la partie de centrage (16b) s'étend par rapport à l'axe longitudinal central (a) selon un angle (β₁) de 10° à 20°, en particulier de 15°.
